# EUROPEAN PATENT APPLICATION

(11) **EP 4 603 716 A1**
(43) Date of publication of application: **20.08.2025**
(21) Application number: 24157724.6
(22) Date of filing: 15.02.2024
(51) Int. Cl.: F16D 65/00, F01N 1/00

(54) **BRAKE DUST PARTICLE FILTER SYSTEM**

(71) Applicant: MANN+HUMMEL GmbH, 71636 Ludwigsburg (DE)
(72) Inventor: KÜMMERLING, Volker, 71636 Ludwigsburg (DE); WÖRZ, Tobias, 71636 Ludwigsburg (DE); FICHTNER, Christian, 71636 Ludwigsburg (DE); JESSBERGER, Thomas, 71636 Ludwigsburg (DE)
(74) Representative: Mann + Hummel Intellectual Property

(57) **Abstract**

A brake dust particle filter system (1) includes at least one brake assembly (8), and a suction assembly (2) including at least one suction driving unit (5) for driving a suction volume flow, an incoming suction volume flow branch (6), and an outgoing suction volume flow branch (7), and a suction volume flow outlet (9), the suction volume flow being driven in the incoming suction volume flow branch (6) from the brake assembly (8) toward the suction driving unit (5) and in the outgoing suction volume flow branch (7) away from the suction driving unit (5) toward the suction volume flow outlet (9). The brake dust particle filter system (1) further includes an acoustic damper assembly (4) including at least one acoustic damper unit (10) for acoustically damping operating noises of the suction assembly (2).

## Description

### Technical Field

The invention relates to a brake dust particle filter system including at least one brake assembly, and a suction assembly including at least one suction driving unit for driving a suction volume flow in an incoming suction volume flow branch from the brake assembly toward the suction driving unit as well as in an outgoing suction volume flow branch away from the suction driving unit toward a suction volume flow outlet, and a filter assembly including at least one filter element for filtering brake dust particles out of the suction volume flow arranged fluidically between the incoming suction volume flow branch and the outgoing suction volume flow branch.

### Background Art

Such brake dust particle filter systems are per se known in the art. They are advantageously used with brake assemblies in both mobile and stationary applications. Mobile applications include, for example, passenger or goods vehicles and rail vehicles. Stationary applications include, for example, brake assemblies used in wind turbines.

Brake dust particles are commonly produced upon actuation of the brake assembly. Typically, brake abrasion due to friction between a brake pad and a brake disc of the brake assembly results in the production of said brake dust particles. The brake dust particles constitute a (fine) dust load in the ambient air of the brake disc. Such (fine) dust load of the ambient air is harmful to humans and nature. It should therefore not escape into the environment.

To this end, the suction assembly is provided. It includes the suction driving unit. The suction driving unit establishes and maintains the suction volume flow from the brake assembly toward the suction driving unit. Said suction volume flow is contained in the incoming suction volume flow branch. Furthermore, the suction driving unit establishes and maintains the suction volume flow away from the suction driving unit toward the suction volume flow outlet. The latter suction volume flow is contained in the outgoing suction volume flow branch. One example for the suction driving unit is a pump. Said pump can drive a suction air flow as the suction volume flow.

The suction volume flow originating from the brake assembly contains ambient air of the brake assembly loaded with brake dust particles. The brake dust particles are thus guided away from the brake assembly via the suction volume flow. The brake dust particles are then separated from the suction volume flow in the filter element of the filter assembly. Therefore, they cannot escape into the environment. The filter element is fluidically arranged at the crossover from the incoming suction volume flow branch to the outgoing suction volume flow branch. The suction volume flow within the incoming suction volume flow branch is hence loaded with brake dust particles. The suction volume flow in the outgoing suction volume flow branch is cleaned of brake dust particles. The suction volume flow within the outgoing suction volume flow path can therefore be exhausted into the ambient air of the brake dust particle filter system via the suction volume flow outlet.

However, for example in mobile applications such as passenger vehicles, it is frequently encountered that operation of the suction driving unit can cause a significant source of acoustic disturbance or noise nuisance that can be perceived as unpleasant by users of the passenger vehicle. This acoustic disturbance may be caused by flow noise of the suction volume flow. Such acoustic disturbance or noise nuisance is unwanted.

### Summary

It is therefore an objective of the present invention to provide a brake dust particle filter system which may effectively reduce the operating noises of the suction assembly.

This objective is achieved in that the brake dust particle filter system further includes an acoustic damper assembly including at least one acoustic damper unit for acoustically damping operating noises of the suction assembly.

A brake dust particle filter system is provided in which the acoustic damper unit is used to effectively dampen the operating noises of the suction assembly. Providing the acoustic damper unit is a constructionally efficient solution. The construction of the suction assembly in existing brake dust particle filter systems, e.g. in vehicles, need not be altered. The acoustic damper assembly with its acoustic damper unit can easily be retrofitted to existing suction assemblies. The acoustic damper unit may include any suitable acoustic damper known in the art. It may therefore, for example, include an acoustic damper filter, an acoustic damper volume, an acoustic damper volume with acoustic damper wool (similar to an exhaust of a passenger vehicle), or a broadband acoustic damper. The acoustic disturbance or noise nuisance potentially caused by the suction driving unit can efficiently be alleviated.

Further advantageous embodiments of the invention are provided in the dependent claims.

In one embodiment the acoustic damper unit is arranged fluidically in the outgoing suction volume flow branch.

It has been shown that flow noises of the outgoing suction volume flow branch typically present the biggest contribution to the acoustic disturbance or noise nuisance caused by the suction assembly. Hence, the acoustic damper unit is advantageously arranged fluidically in the outgoing suction volume flow branch. The acoustic damper unit may in one embodiment include an acoustic damper filter. Consequently, the suction volume flow in the outgoing suction volume flow branch may be filtered once again downstream of the filter element. Any remaining brake dust particles or other contaminations are advantageously filtered out of the suction volume flow in the outgoing suction volume flow branch.

In another embodiment the acoustic damper assembly includes at least one acoustically damped line element accommodating the suction volume flow in the outgoing suction volume flow branch.

The acoustically damped line element may be provided alternatively or additionally to the acoustic damper unit. If it is provided alternatively to the acoustic damper unit, it may on its own provide sufficient acoustic damping for the flow noise of the outgoing suction volume flow branch. If it is provided additionally to the acoustic damper unit, it may further enhance acoustic damping of the operating noises of the suction assembly, in particular flow noise of the outgoing suction volume flow branch.

In another embodiment the acoustically damped line element includes an acoustically damped connection line element arranged fluidically between the suction driving unit and the acoustic damper unit, and/or an acoustically damped outlet line element arranged fluidically between the acoustic damper unit and the suction volume flow outlet.

In this embodiment the acoustically damped line element may be provided additionally to the acoustic damper unit. The acoustically damped line element may advantageously alternatively or additionally be included of two distinct line elements, i.e. the acoustically damped connection line element and the acoustically damped outlet line element. Each of said line elements may on its own and/or in conjunction with the acoustic damper unit suffice to provide efficient reduction in the operating noise of the suction assembly, in particular the flow noise caused in the outgoing suction volume flow branch.

In another embodiment the suction volume flow outlet is connected fluidically to the brake assembly such that the suction volume flow in the outgoing suction volume flow branch is directed onto the brake assembly via the suction volume flow outlet.

In this embodiment of the invention a brake dust particle filter system is provided in which a temperature level of the brake assembly can be effectively controlled. The aforementioned brake abrasion due to friction between the brake pad and the brake disc of the brake assembly results not only in the production of brake dust particles. In fact it also produces a considerable amount of heat. Therefore, the brake assembly, in particular the brake disc, need to be cooled. This can effectively be achieved by the suction volume flow in the outgoing suction volume flow branch. As the suction volume flow in the outgoing suction volume flow branch is cleaned from brake dust particles and other contaminations it can safely be used for this purpose. In controlling the suction volume flow exhausted via the suction volume flow outlet, the temperature level of the brake assembly (in particular the brake disc) can be effectively controlled. The temperature level can be prevented from reaching a temperature level critical to the brake assembly. The temperature level of the brake assembly can be lowered by means of the impinging suction volume flow from the outgoing suction volume flow branch.

In one embodiment the suction assembly further includes a suction volume flow switching unit for fluidically switching the suction volume flow in the incoming suction volume flow branch between a first incoming suction volume flow subbranch and a second incoming suction volume flow subbranch.

The first incoming suction volume flow subbranch and the second incoming suction volume flow subbranch can be used alternatively or additionally for drawing the suction volume flow in the incoming suction volume flow branch. The temperature of the suction volume flow in the first incoming suction volume flow subbranch may be at a first temperature value. The temperature of the suction volume flow in the second incoming suction volume flow subbranch may be at a second temperature value. The first temperature value and the second temperature value may be different. The second temperature value may be lower than the first temperature value. This may be due to the fact that the respective suction volume flows are drawn from different locations. The temperature level of the brake assembly can therefore be controlled more efficiently. It is possible to switch between two different suction volume flows with different temperatures. Depending on requirements the suction volume flow with the appropriate temperature for cooling of the brake assembly can be chosen. The cooling capacity can be increased.

In another embodiment the first incoming suction volume flow subbranch is directed fluidically from the brake assembly toward the suction driving unit, and the second incoming suction volume flow subbranch is directed fluidically from a raw suction volume flow inlet toward the suction driving unit.

The suction volume flow in the first incoming suction volume flow subbranch is drawn from the ambient air of the brake assembly. The suction volume flow in the second incoming suction volume flow subbranch is drawn from ambient air from a different location within the brake dust particle filter system. The ambient air drawn from the brake assembly typically has a higher temperature than the ambient air drawn from a different location. This is due to the heat production in the brake assembly during braking operations. The temperature of the suction volume flow in the second incoming suction volume flow subbranch is thus lower than the temperature of the suction volume flow in the first suction volume flow subbranch. The temperature level of the brake assembly can therefore be controlled more efficiently. Two suction volume flows at different temperatures may be directed onto the brake assembly. The cooling capacity can be increased. Controlling of the temperature level of the brake assembly can also be achieved when the, e.g., vehicle in which the brake dust particle filter system is used is currently not operated. To this end, it is possible to nevertheless operate the suction assembly and thereby provide the suction volume flow in the outgoing suction volume flow branch.

In another embodiment the second incoming suction volume flow subbranch is fluidically shorter than the first incoming suction volume flow subbranch.

By fluidically shortening the second incoming suction volume flow subbranch the volume flow and thus the cooling capacity can be increased.

In another embodiment, the acoustic damper unit includes a housing including an inlet and an outlet, the inlet being fluidly connected to the acoustically damped connection line element, and the outlet being fluidly connected to the acoustically damped outlet line element. The acoustic damper unit further includes a pass-through pipe fluidly interposed between the inlet and the outlet and including holes spaced apart and extending radially through a circumferential outer wall of the pass-through pipe, and a damping material filling a portion of the housing that is not filled by the pass-through pipe, the damping material being for reducing or eliminating noise or sound of the suction volume flow passing through the holes.

In another embodiment, the acoustic damper unit includes a housing including an inlet and an outlet, the inlet being fluidly connected to the acoustically damped connection line element, and the outlet being fluidly connected to the acoustically damped outlet line element. The acoustic damper unit further includes an acoustic filter element fluidly connected to the outlet and including pleated filter media circumferentially around and extending from an inner cylindrical tube, the pleated filter media being for adsorbing one or more portions of the suction volume flow passing through the inner cylindrical tube, thereby reducing or eliminating the noise or the sound of the suction volume flow passing through the acoustic damper unit.

In another embodiment, the acoustic damper unit includes a housing including an inlet and an outlet, the inlet being fluidly connected to the acoustically damped connection line element, and the outlet being fluidly connected to the acoustically damped outlet line element. The acoustic damper unit further includes a broadband silencer including a pass-through pipe fluidly interposed between the inlet and the outlet and including holes spaced apart and extending radially through a circumferential outer wall of the pass-through pipe, and partitions splitting the housing into different-sized sections, each of which is for reducing or eliminating different frequencies of the noise or the sound of the suction volume flow passing through the holes, the partitions being disposed respectively and circumferentially around different portions of the pass-through pipe.

In another embodiment, the suction volume flow in the outgoing suction volume flow branch is directed onto a brake piston of the brake assembly via the suction volume flow outlet. A critical temperature in the brake assembly is in brake fluid at the brake piston. If the brake fluid there becomes too hot, a braking effect may be lost. Thus, the cooling suction volume flow via the suction volume flow outlet is directed onto the brake piston.

In another embodiment, the suction driving unit is configured to drive the suction volume flow when a vehicle comprising the brake dust particle filter system is driving or braking, and drive the suction volume flow when the vehicle is standstill and a temperature at the brake assembly is greater than a predetermined threshold. Thus, the brake assembly is constantly cooled by the suction volume flow while driving or braking, and may be cooled during a post-heating phase when the vehicle is standstill and the highest temperature peaks are achieved after intensive braking, e.g., driving downhill. In the post-heating phase, the suction driving unit may be activated to drive the suction volume flow based on the temperature at the brake assembly that is sensed by a temperature sensor at the brake assembly.

### Brief Description of Drawings

Further advantages can be seen in the following description of the drawings. The drawings show examples of embodiments of the invention. The drawings, description and claims contain numerous features in combination. The person skilled in the art will expediently consider the features individually and combine them to form further useful combinations.
Figure 1 shows a brake dust particle filter system according to the present invention.
Figure 2 shows another embodiment of a brake dust particle filter system according to the present invention.
Figure 3 shows yet another embodiment of a brake dust particle filter system according to the present invention.
Figures 4A and 4B show an acoustic damper unit of the brake dust particle filter system of Figure 1.
Figures 5A, 5B, and 5C show another embodiment of an acoustic damper unit of the brake dust particle filter system of Figure 1.
Figures 6A and 6B show yet another embodiment of an acoustic damper unit of the brake dust particle filter system of Figure 1.

### Description of Embodiments

The figures only show examples and are not to be understood as limiting.

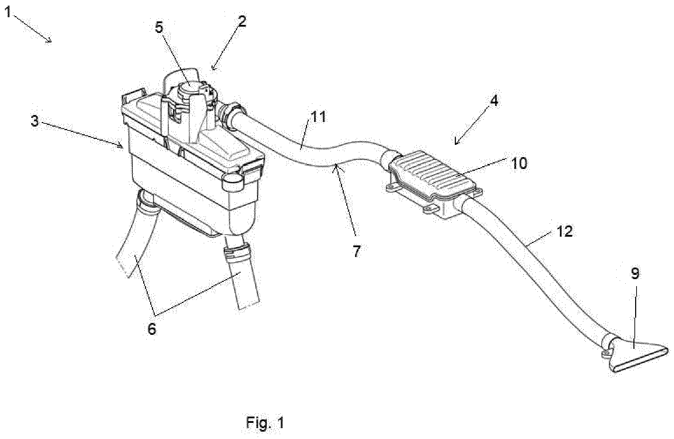

Figure 1 shows a brake dust particle filter system 1. The brake dust particle filter system 1 includes a suction assembly 2, a filter assembly 3 and an acoustic damper assembly 4.

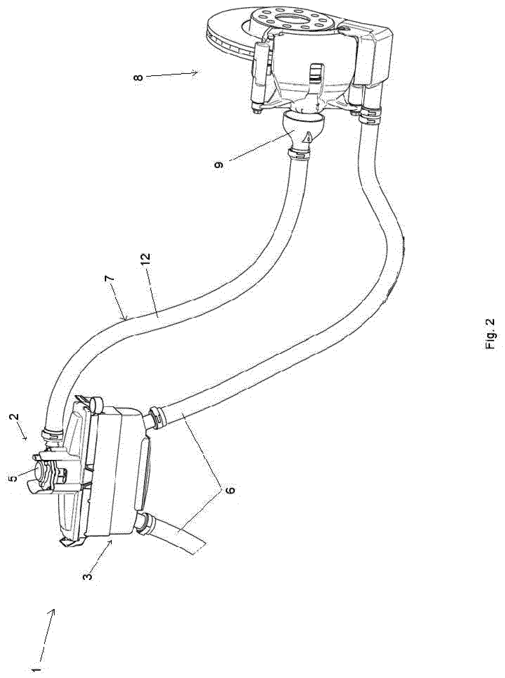

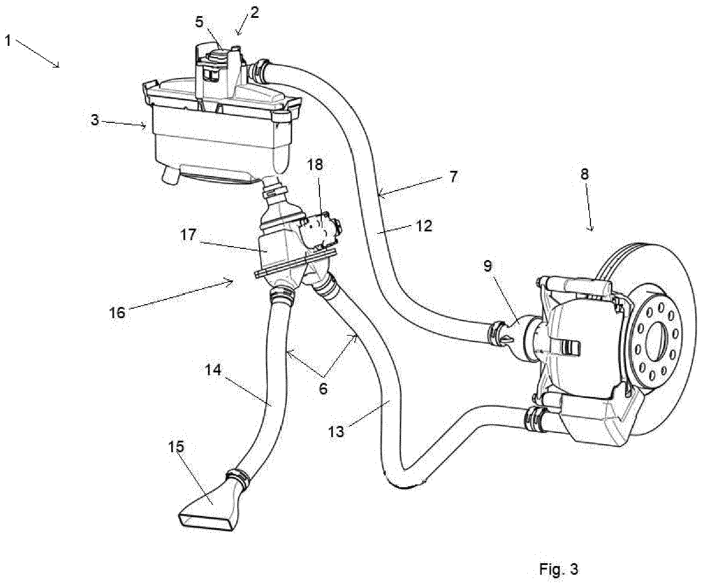

The suction assembly 2 includes a suction driving unit 5 in the form of a pump. An incoming suction volume flow branch 6 is provided fluidically upstream of the filter assembly 3. An outgoing suction volume flow branch 7 is provided fluidically downstream of the filter assembly 3. The suction driving unit 5 drives and maintains a suction volume flow in the incoming suction volume flow branch 6 from a brake assembly 8 (cf. Figures 2 and 3) toward the suction driving unit 5. The suction driving unit 5 also drives and maintains a suction volume flow in the outgoing suction volume flow branch 7 from the suction driving unit 5 toward a suction volume flow outlet 9.

The suction assembly 2 thus serves to draw a suction volume flow of ambient air from the brake assembly 8 (cf. Figures 2 and 3). Said ambient air is loaded with brake dust particles when the brake assembly 8 is operated. The brake dust particles are carried along in the suction volume flow in the incoming suction volume flow branch 6. They are separated from the suction volume flow by means of a filter element (not shown) included in the filter assembly 3. After passage of the filter assembly 3, the suction volume flow enters the outgoing suction volume flow branch 7. The cleaned suction volume flow in the outgoing suction volume flow branch 7 is exhausted into the ambient air via the suction volume flow outlet 9.

It has been found that the suction volume flow in the outgoing suction volume flow branch 7 typically causes a considerable acoustic disturbance and noise nuisance. In order to reduce or eliminate said acoustic disturbance and noise nuisance the acoustic damper assembly 4 includes an acoustic damper unit 10. Said acoustic damper unit 10 is arranged in the outgoing suction volume flow branch 7. The acoustic damper unit 10 is situated fluidically between the suction driving unit 5 and the suction volume flow outlet 9. The acoustic damper unit 10 may include an acoustic damper filter, an acoustic damper volume, an acoustic damper volume with acoustic damper wool (similar to an exhaust of a passenger vehicle), or a broadband acoustic damper.

Furthermore, the acoustic damper assembly 4 includes an acoustically damped line element which is included of an acoustically damped connection line element 11 and an acoustically damped outlet line element 12. The acoustically damped connection line element 11 is fluidically arranged between the suction driving unit 5 and the acoustic damper unit 10. The acoustically damped outlet line element 12 is fluidically arranged between the acoustic damper unit 10 and the suction volume flow outlet 9. Either or both of the acoustically damped connection line element 11 or/and the acoustically damped outlet line element 12 may provide additional acoustic damping.

Figure 2 shows another embodiment of the brake dust particle filter system 1. In this embodiment the suction volume flow outlet 9 is arranged such that the suction volume flow in the outgoing suction volume flow branch 7 is directed onto the brake assembly 8 via the suction volume flow outlet 9. Thereby, the cleaned suction volume flow emerging from the suction volume flow outlet 9 can be used to cool the brake assembly 8 during operation.

The suction volume flow in the outgoing suction volume flow branch 7 may be directed onto a brake piston of the brake assembly 8 via the suction volume flow outlet 9. A critical temperature in the brake assembly 8 is in brake fluid at the brake piston. If the brake fluid there becomes too hot, a braking effect may be lost. Thus , the cooling suction volume flow via the suction volume flow outlet 9 may be directed onto the brake piston.

The suction driving unit 5 may be configured to drive the suction volume flow when a vehicle comprising the brake dust particle filter system 1 is driving or braking, and drive the suction volume flow when the vehicle is standstill and a temperature at the brake assembly 8 is greater than a predetermined threshold. Thus, the brake assembly 8 is constantly cooled by the suction volume flow while driving or braking, and may be cooled during a post-heating phase when the vehicle is standstill and the highest temperature peaks are achieved after intensive braking, e.g., driving downhill. In the post-heating phase, the suction driving unit 5 may be activated to drive the suction volume flow based on the temperature at the brake assembly 8 that is sensed by a temperature sensor at the brake assembly 8.

Figure 3 shows yet another embodiment of the brake dust particle filter system 1. In this embodiment the incoming suction volume flow branch 6 is subdivided into a first incoming suction volume flow subbranch 13 and a second incoming suction volume flow subbranch 14. The first incoming suction volume flow subbranch 13 is directed fluidically from the brake assembly 8 toward the suction driving unit 5. The second incoming suction volume flow subbranch 14 is directed fluidically from a raw suction volume flow inlet 15 toward the suction driving unit 5. A suction volume flow switching unit 16 is provided. It includes an actuator 17 and a servomotor 18 for fluidically switching the suction volume flow in the incoming suction volume flow branch 6. The suction volume flow may be switched between the first incoming suction volume flow subbranch 13 and the second incoming suction volume flow subbranch 14.

The first incoming suction volume flow subbranch 13 draws air in the vicinity of the brake assembly 8. The second incoming suction volume flow subbranch 14 draws air at a different location. The air drawn via the raw suction volume flow inlet 15 typically has a lower temperature than air drawn in the vicinity of the (recently actuated) brake assembly 8. Therefore, two different suction volume flows at two different temperatures may be selected for cooling the brake assembly 8 during operation. Depending on the requirements the suction volume flow with a lower temperature in the second incoming suction volume flow subbranch 14 may be selected by the suction volume flow switching unit 16. Alternatively, the suction volume flow with a higher temperature from the first incoming suction volume flow subbranch 13 may be selected by the suction volume flow switching unit 16.

Therefore, cooling of the brake assembly 8 can be efficiently controlled. The temperature level of the suction volume flow impinging on the brake assembly 8 can be adjusted as needed. The temperature level of the brake assembly 8 can thus be efficiently controlled. As can be seen as well, the second incoming suction volume flow subbranch 14 is fluidically shorter than the first incoming suction volume flow subbranch 13. By fluidically shortening the second incoming suction volume flow subbranch 14 the volume flow and thus the cooling capacity can be increased.

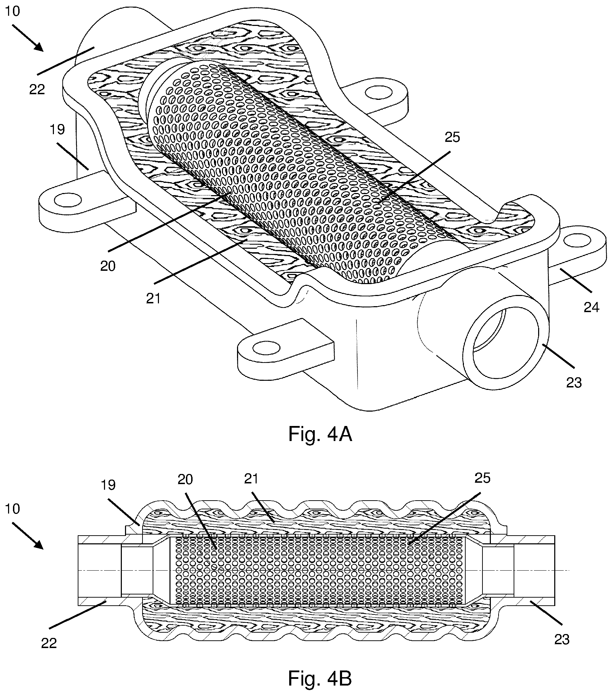

Figures 4A and 4B show the acoustic damper unit 10 of the brake dust particle filter system 1 of Figure 1. The acoustic damper unit 10 includes a housing 19, a pass-through pipe 20, and damping material 21.

The housing 19 includes an inlet 22 and an outlet 23. The inlet 22 is fluidly connected to the acoustically damped connection line element 11, and the outlet 23 is fluidly connected to the acoustically damped outlet line element 12. The housing 19 further includes mounting elements 24 for mounting the acoustic damper unit 10 to, for example, a housing of a vehicle. Although the mounting elements 24 are shown to be holes for accepting screws to be installed into, e.g., the housing of the vehicle, the mounting elements 24 may be any type of mounting elements known to a person of ordinary skill in the art.

The pass-through pipe 20 is fluidly interposed between the inlet 22 and the outlet 23 of the housing 19. The pass-through pipe 20 includes holes 25 spaced apart and extending radially through a circumferential outer wall of the pass-through pipe 20. The holes 25 allow portions of the suction volume flow to pass through the holes 25 into the damping material 21, thereby modifying or attenuating noise or sound of the suction volume flow passing through the pass-through pipe 20.

The damping material 21 fills a portion of the housing 19 that is not filled by the pass-through pipe 20. The damping material 21 may include, for example, glass wool and/or rock wool for reducing or eliminating the noise or the sound of the suction volume flow passed through the holes 25.

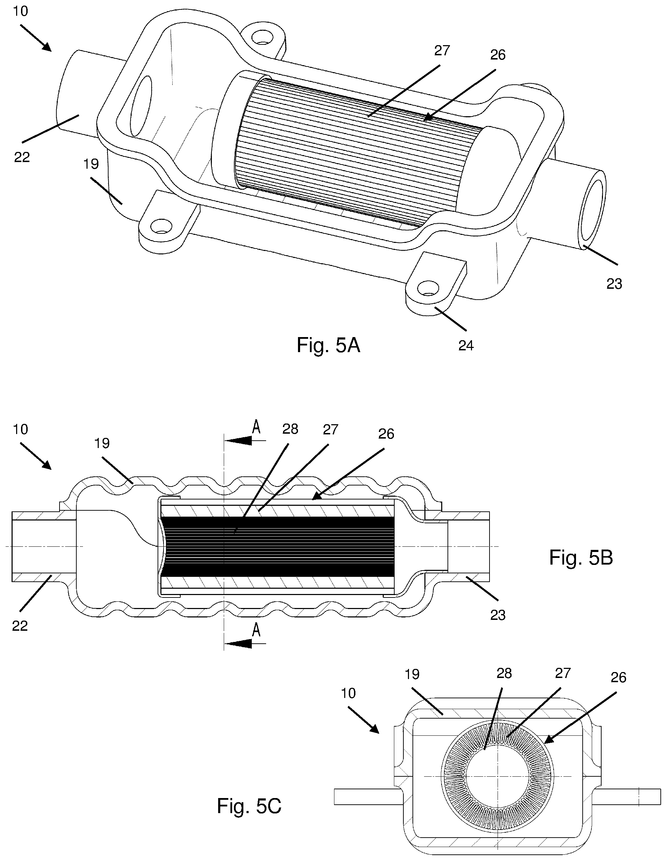

Figures 5A, 5B, and 5C show another embodiment of the acoustic damper unit 10 of the brake dust particle filter system 1 of Figure 1. In this embodiment, the acoustic damper unit 10 includes the housing 19 and an acoustic filter element 26.

The acoustic filter element 26 is fluidly connected to the outlet 23 of the housing 19. The acoustic filter element 26 includes pleated filter media 27 circumferentially around and extending from an inner cylindrical tube 28. The pleated filter media 27 adsorbs one or more portions of the suction volume flow passing through the acoustic damper unit 10, namely, passing through the inner cylindrical tube 28, thereby reducing or eliminating the noise or the sound of the suction volume flow passing through the acoustic damper unit 10.

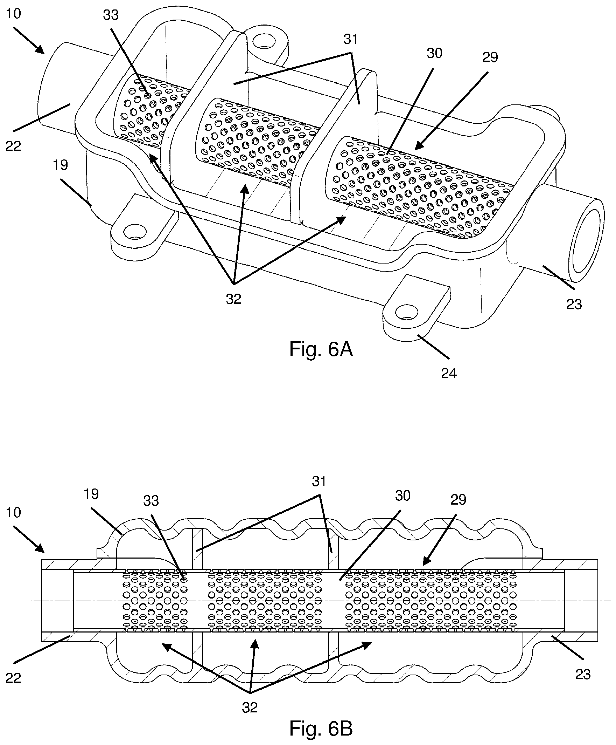

Figures 6A and 6B show yet another embodiment of the acoustic damper unit 10 of the brake dust particle filter system 1 of Figure 1. In this embodiment, the acoustic damper unit 10 includes the housing 19 and a broadband silencer 29.

The broadband silencer 29 includes a pass-through pipe 30 fluidly interposed between the inlet 22 and the outlet 23 of the housing 19. The broadband silencer 29 further includes partitions 31 splitting the housing 19 into different-sized sections 32, each of which reduces or eliminates different frequencies of the noise or the sound of the suction volume flow passing through the pass-through pipe 30. The partitions 31 are disposed respectively and circumferentially around different portions of the pass-through pipe 30.

The pass-through pipe 30 includes holes 33 spaced apart and extending radially through a circumferential outer wall of the pass-through pipe 30. The holes 33 allow portions of the suction volume flow to pass through the holes 33 respectively into the sections 32 of the housing 19, thereby modifying or attenuating the noise or the sound of the suction volume flow passing through the pass-through pipe 30. The holes 33 cooperate with engineered designs and volumes of the sections 32 to provide a designed amplitude frequency spectrum response of the broadband silencer 29, thereby reducing or eliminating the different frequencies of the noise or the sound of the suction volume flow passing through the holes 33 to meet design requirements.

## Claims

1. A brake dust particle filter system (1) comprising:
at least one brake assembly (8);
a suction assembly (2) comprising at least one suction driving unit (5) for driving a suction volume flow, an incoming suction volume flow branch (6), and an outgoing suction volume flow branch (7), and a suction volume flow outlet (9), the suction volume flow being driven in the incoming suction volume flow branch (6) from the brake assembly (8) toward the suction driving unit (5) and in the outgoing suction volume flow branch (7) away from the suction driving unit (5) toward the suction volume flow outlet (9);
a filter assembly (3) comprising at least one filter element for filtering brake dust particles out of the suction volume flow, the filter assembly (3) being arranged fluidically between the incoming suction volume flow branch (6) and the outgoing suction volume flow branch (7); and
an acoustic damper assembly (4) comprising at least one acoustic damper unit (10) for acoustically damping operating noises of the suction assembly (2).

2. The brake dust particle filter system (1) according to claim 1, wherein the acoustic damper unit (10) is arranged fluidically in the outgoing suction volume flow branch (7).

3. The brake dust particle filter system (1) according to claim 1 or 2, wherein the acoustic damper assembly (4) comprises at least one acoustically damped line element (11, 12) accommodating the suction volume flow in the outgoing suction volume flow branch (7).

4. The brake dust particle filter system (1) according to claim 3, wherein the acoustically damped line element (11, 12) comprises:
an acoustically damped connection line element (11) arranged fluidically between the suction driving unit (5) and the acoustic damper unit (10); and/or
an acoustically damped outlet line element (12) arranged fluidically between the acoustic damper unit (10) and the suction volume flow outlet (9).

5. The brake dust particle filter system (1) according to claim 4, wherein the acoustic damper unit (10) comprises:
a housing (19) comprising an inlet (22) and an outlet (23), the inlet (22) being fluidly connected to the acoustically damped connection line element (11), and the outlet (23) being fluidly connected to the acoustically damped outlet line element (12);
a pass-through pipe (20) fluidly interposed between the inlet (22) and the outlet (23) and comprising holes (25) spaced apart and extending radially through a circumferential outer wall of the pass-through pipe (20); and
a damping material (21) filling a portion of the housing (19) that is not filled by the pass-through pipe (20), the damping material (21) being for reducing or eliminating noise or sound of the suction volume flow passing through the holes (25).

6. The brake dust particle filter system (1) according to claim 4, wherein the acoustic damper unit (10) comprises:
a housing (19) comprising an inlet (22) and an outlet (23), the inlet (22) being fluidly connected to the acoustically damped connection line element (11), and the outlet (23) being fluidly connected to the acoustically damped outlet line element (12); and
an acoustic filter element (26) fluidly connected to the outlet (23) and comprising pleated filter media (27) circumferentially around and extending from an inner cylindrical tube (28), the pleated filter media (27) being for adsorbing one or more portions of the suction volume flow passing through the inner cylindrical tube (28).

7. The brake dust particle filter system (1) according to claim 4, wherein the acoustic damper unit (10) comprises:
a housing (19) comprising an inlet (22) and an outlet (23), the inlet (22) being fluidly connected to the acoustically damped connection line element (11), and the outlet (23) being fluidly connected to the acoustically damped outlet line element (12); and
a broadband silencer (29) comprising:
a pass-through pipe (30) fluidly interposed between the inlet (22) and the outlet (23) and comprising holes (33) spaced apart and extending radially through a circumferential outer wall of the pass-through pipe (30); and
partitions (31) splitting the housing (19) into different-sized sections (32), each of which is for reducing or eliminating different frequencies of noise or sound of the suction volume flow passing through the holes (33), the partitions (31) being disposed respectively and circumferentially around different portions of the pass-through pipe (30).
